# EUROPEAN PATENT APPLICATION

(11) **EP 2 711 751 A1**
(43) Date of publication of application: **26.03.2014**
(21) Application number: 12786432.0
(22) Date of filing: 26.01.2012
(51) Int. Cl.: G02B 6/255

(54) **METHOD FOR DISTINGUISHING OPTICAL FIBER AND METHOD FOR FUSION-SPLICING OPTICAL FIBERS**

(30) Priority: 19.05.2011 JP 2011112454
(71) Applicant: FUJIKURA LTD., Tokyo 135-8512 (JP)
(72) Inventor: TAKAHASHI, Ataru, Sakura-shi Chiba 285-8550 (JP); KONUMA, Tomohiro, Sakura-shi Chiba 285-8550 (JP); KUBO, Toshiki, Tokyo 135-8512 (JP)
(74) Representative: Grünecker, Kinkeldey, Stockmair & Schwanhäusser
(86) International application number: PCT/JP2012/051629
(87) International publication number: WO 2012/157294

(57) **Abstract**

Provided is a method for distinguishing an optical fiber, which is capable of accurately distinguishing a type of the optical fiber even in a case where it is difficult to grasp a feature of a brightness waveform as in an optical fiber having a complex refractive index distribution and an elliptical core optical fiber. In an event of fusion-splicing end surfaces 1a, 3a of a pair of optical fibers 1, 3 to each other, a type of each of the optical fibers is distinguished from an image obtained by imaging an end surface of the optical fiber. A brightness pattern of the end surface of the optical fiber, which is obtained by imaging the end surface of the optical fiber from front by each of imaging units 25, 27 arranged opposite to the end surface of the optical fiber, is collated with basic brightness patterns prestored for each type of the optical fibers, a basic brightness pattern that coincides with the brightness pattern is obtained, and the type of the optical fiber is distinguished.

## Description

### [Technical Field]

The present invention relates to a method for distinguishing an optical fiber and a method for fusion-splicing optical fibers.

### [Background Art]

A technology has been disclosed, in which, for example, distances each between a bright portion end in a brightness distribution obtained by imaging an end surface of each of optical fibers from a side thereof by a camera and a brightness peak closest to this bright portion end are obtained on both sides of the bright portion end, adjustment is made so that a sum thereof can be minimum, stress application positions of both of the optical fibers are allowed to coincide with each other, and both of the optical fibers are fusion-spliced to each other (for example, described in Patent Literature 1).

### [Citation List]

### [Patent Literature]

[PTL 1] Japanese Patent Laid-Open Publication No. 2002-328253

### [Summary of Invention]

However, in the technology described in Patent Literature 1, image processing is implemented for a transmitted light image obtained by imaging the end surfaces of the optical fibers from the side by the camera. Accordingly, in the case where it is difficult to grasp a feature of a brightness waveform as in an optical fiber having a complex refractive index distribution and an elliptical core optical fiber, then it is difficult to distinguish a type of the optical fiber.

In this connection, it is an object of the present invention to provide a method for distinguishing an optical fiber and a method for fusion-splicing optical fibers, each of which is capable of accurately distinguishing the type of the optical fiber even in the case where it is difficult to grasp the feature of the brightness waveform as in the optical fiber having a complex refractive index distribution and the elliptical core optical fiber.

### [Solution to Problem]

A first aspect of the present invention is a method for distinguishing an optical fiber, in which, in an event of fusion-splicing end surfaces of a pair of optical fibers to each other, a type of each of the optical fibers is distinguished from an image obtained by imaging the end surface of the optical fiber, the method including: collating a brightness pattern of the end surface of the optical fiber, the brightness pattern being obtained by imaging a front of the end surface of the optical fiber by an imaging unit arranged opposite to the end surface of the optical fiber, with basic brightness patterns prestored for each type of the optical fibers; and obtaining a basic brightness pattern that coincides with the brightness pattern.

A second aspect of the present invention according to the first aspect is characterized in that the end surface of the optical fiber is imaged by the imaging unit after the end surface of the optical fiber is subjected to an electric discharge.

A third aspect of the present invention is a method for fusion-splicing optical fibers, in which end surfaces of optical fibers are fusion-spliced to each other, the method including: distinguishing types of both of the optical fibers by the method for distinguishing an optical fiber according to either one of the first and second aspects of the present invention; and centering each of the optical fibers by rotating the optical fiber in an axial direction.

In accordance with the method for distinguishing an optical fiber according to the present invention, the brightness pattern of the end surface of the optical fiber, which is obtained by imaging the end surface of the optical fiber from the front by the imaging unit, is used. Accordingly, an accurate brightness pattern can be obtained in comparison with the case of obliquely imaging the end surface of the optical fiber. In such a way, if the accurate brightness pattern and the basic brightness patterns prestored for each type of the optical fibers are collated with each other, then the basic brightness pattern that coincides with the brightness pattern concerned can be obtained rapidly and accurately, and the type of the optical fiber can be distinguished with ease.

### [Brief Description of Drawings]

FIG. 1 is a perspective view of a fusion-splicing apparatus according to an embodiment of the present invention.
FIG. 2 is a side view showing a portion of the fusion-splicing apparatus of FIG. 1, which holds optical fibers.
FIG. 3 shows a state of imaging an end surface of one of the optical fibers by the fusion-splicing apparatus of FIG. 1 : FIG. 3 (a) is a plan view thereof; and FIG. 3 (b) is a right side view of FIG. 3(a).
FIG. 4 shows a state of imaging an end surface of other of the optical fibers by the fusion-splicing apparatus of FIG. 1: FIG. 4 (a) is a plan view thereof; and FIG. 4 (b) is a right side view of FIG. 4(a).
FIG. 5 shows a state where a mirror shaft is located at a rising end position in the fusion-splicing apparatus of FIG. 1: FIG. 5(a) is a side view viewed from a side perpendicular to the optical fibers of FIG. 1; and FIG. 5 (b) is a front view viewed in a length direction of the optical fibers of FIG. 1.
FIG. 6 shows a state where the mirror shaft is located at a lowering end position in the fusion-splicing apparatus of FIG. 1: FIG. 6(a) is a side view viewed from the side perpendicular to the optical fibers of FIG. 1; and FIG. 6(b) is a front view viewed in the length direction of the optical fibers of FIG. 1.
FIG. 7 is a control block diagram of the fusion-splicing apparatus of FIG. 1.
FIG. 8 is views corresponding to FIG. 3 in a fusion-splicing apparatus according to another embodiment of the present invention: FIG. 8(a) is a plan view thereof; and FIG. 8(b) is a right side view of FIG. 8(a).
FIG. 9 is views corresponding to FIG. 4 in the fusion-splicing apparatus according to the another embodiment of the present invention: FIG. 9(a) is a plan view thereof; and FIG. 9(b) is a right side view of FIG. 9(a).
FIG. 10 shows samples used for distinguishing types of the optical fibers by a method of the present invention: FIG. 10(a) is a front view showing an end surface shape of a PANDA-type optical fiber; FIG. 10(b) is a front view showing an end surface shape of a bowtie-type optical fiber; and FIG. 10 (c) is a front view showing an end surface shape of an elliptical jacket-type optical fiber.
FIG. 11 is a flowchart of distinguishing the types of the optical fibers by the method of the present invention.
FIG. 12 shows an example of the PANDA-type optical fiber: FIG. 12(a) is an end surface image thereof; and FIG. 12(b) is a brightness pattern thereof.
FIG. 13 shows an example of the bowtie-type optical fiber: FIG. 13(a) is an end surface image thereof; and FIG. 13(b) is a brightness pattern thereof.
FIG. 14 shows an example of the elliptical jacket-type optical fiber: FIG. 14 (a) is an end surface image thereof; and FIG. 14(b) is a brightness pattern thereof.

### [Description of Embodiments]

A description is made below in detail of specific embodiments, to which the present invention is applied, while referring to the drawings.

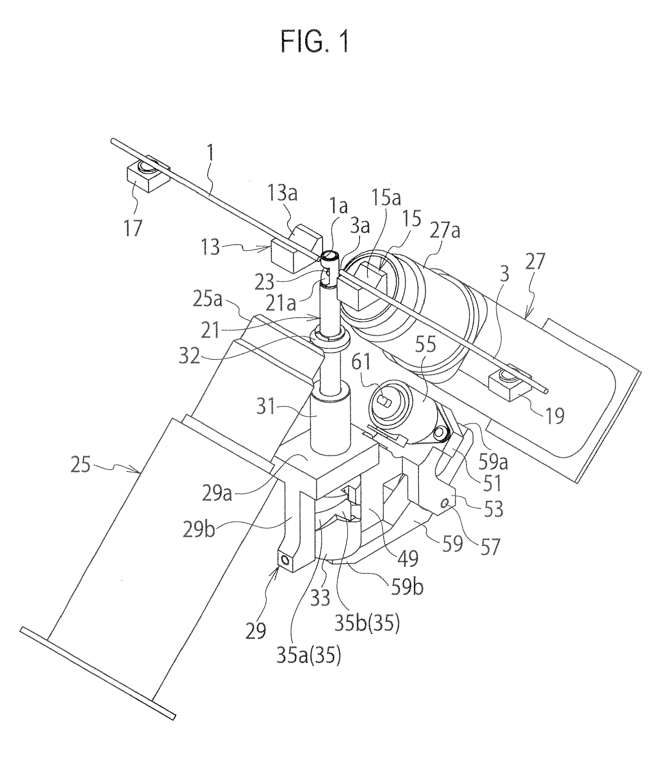

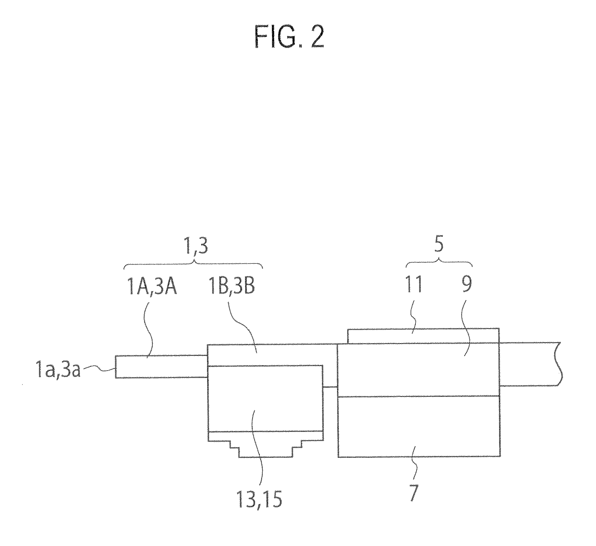

Before making a description of a method for distinguishing an optical fiber according to the present invention, a description is made of a fusion-splicing apparatus that fusion-splices end surfaces of a pair of optical fibers to each other. As shown in FIG. 1, a pair of optical fibers 1 and 3 is grasped by fiber holders 5 shown in FIG. 2, which are provided so as to individually correspond to the optical fibers 1 and 3, in a state of being opposite to each other in an axial line direction thereof, and spacing end surfaces 1a and 3a thereof apart from each other. In a state of housing each of the optical fibers 1 and 3 in a recessed portion of a holder body 9 detachably attached onto a holder base 7, each of the fiber holders 5 fixes each of the optical fibers 1 and 3 by pressing the same from the above by an openable presser plate 11.

As shown in FIG. 2, the optical fibers 1 and 3 include coating resins 1B and 3B, which coat outer circumferences of quartz glass fibers 1A and 3A, and the fiber holders 5 grasp portions including the coating resins 1B and 3B concerned. Note that, as the optical fibers 1 and 3 here, polarization-maintaining optical fibers are used as well as usual optical fibers.

Moreover, more on end surface 1a and 3a sides of the optical fibers 1 and 3 than the above-described fiber holders 5, the optical fibers 1 and 3 are positioned by V-groove bases 13 and 15. In a similar way to the fiber holders 5, the V-groove bases 13 and 15 also position and fix the portions including the coating resins 1B and 3B; however, may position and fix portions of the glass fibers 1A and 3A.

Note that, for the V-groove bases 13 and 15, clamps (not shown) are provided, which partially enter V-grooves 13a and 15a and press the optical fibers 1 and 3 against the V-groove bases 13 and 15.

After imaging and observing the end surfaces 1a and 3a of the pair of optical fibers 1 and 3 by a method to be described later, the whole of the above-described fiber holders 5 rotate about axial centers of the optical fibers 1 and 3 for the purpose of centering or axial center alignment between the optical fibers 1 and 3.

Moreover, as shown in FIG. 1, at appropriate positions of the pair of optical fibers 1 and 3, LED lamps 17 and 19, which project light into the optical fibers 1 and 3 from the side, are arranged. The light projected into the optical fibers 1 and 3 by the LED lamps 17 and 19 is radiated from the end surfaces 1 and 3a of the optical fibers 1 and 3.

Note that portions of the optical fibers 1 and 3, into which the light is to be projected by the LED lamps 17 and 19, may be either portions of the glass fibers 1A and 3A or the portions including the coating resins 1B and 3B; however, in the case of the portions including the coating resins 1B and 3B, it is necessary to make the coating resins 1B and 3B transparent. Moreover, for the optical fibers 1 and 3 in the portions into which the light is to be projected by the LED lamps 17 and 19, it is necessary to cover outer circumferential portions thereof so that the light thus projected cannot leak to the outside.

Moreover, in FIG. 1, the LED lamps 17 and 19 are arranged on side portions of the optical fibers 1 and 3; however, in the case where the optical fibers 1 and 3 are short, the light of the LED lamps may be projected from end surfaces opposite with the end surfaces 1a and 3a.

Then, between the end surfaces 1a and 3a of the pair of optical fibers 1 and 3, a mirror shaft 21 as a reflecting member extended in a vertical direction perpendicular to the axial line direction of the optical fibers 1 and 3 is arranged so as to be vertically movable and rotatable. On a one-side portion in the vicinity of a tip end (upper end) of the mirror shaft 21, a recessed portion 21a is formed. A mirror 23 that composes a reflecting surface is attached onto this recessed portion 21a.

In a state where the mirror shaft 21 is located at a rising end as shown in FIG. 1, the mirror 23 reflects an image of either one of the end surfaces 1a and 3a of the optical fibers 1 and 3. Reflected light of the mirror 23 is oriented toward either one of a first television camera 25 as a first imaging unit arranged on the side and a second television camera 27 as a second imaging unit arranged on the side. These first and second television cameras 25 and 27 are arranged in a state where optical axes of optical systems thereof are inclined with respect to the horizontal plane, and include first and second lenses 25a and 27a on tip end sides thereof, respectively.

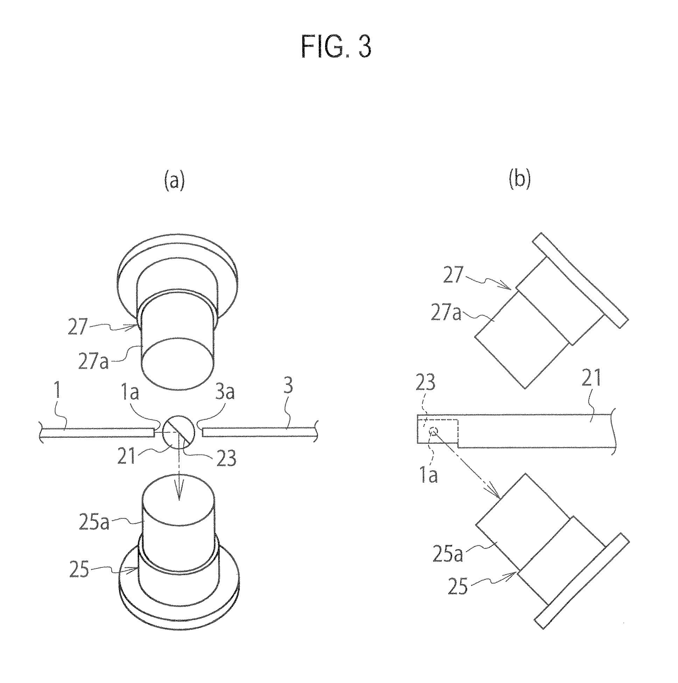

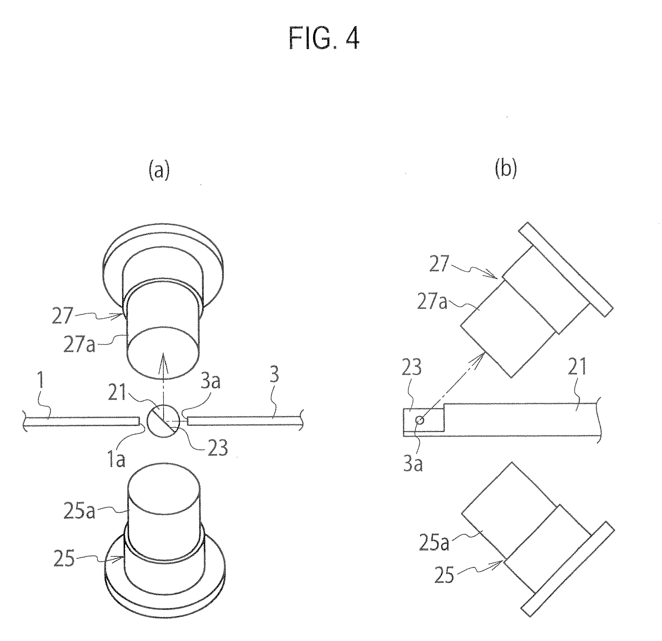

Here, as shown in FIG. 3 corresponding to the state of FIG. 1, as a first state, the image of the end surface 1a of the optical fiber 1 as one in the pair is reflected by the mirror 23 and is made incident onto the first lens 25a. Meanwhile, in a state where the mirror shaft 21 is rotated by 180 degrees from the state of FIG. 1 and FIG. 3, as shown in FIG. 4, as a second state, the image of the end surface 3a of the optical fiber 3 as the other in the pair is reflected by the mirror 23 and is made incident onto the second lens 27a. The reflecting surface of the mirror 23 is positioned so as to include a rotation axis line of the mirror shaft 21. Accordingly, a position of the reflecting surface is not changed even if the mirror shaft 21 is rotated by 180 degrees.

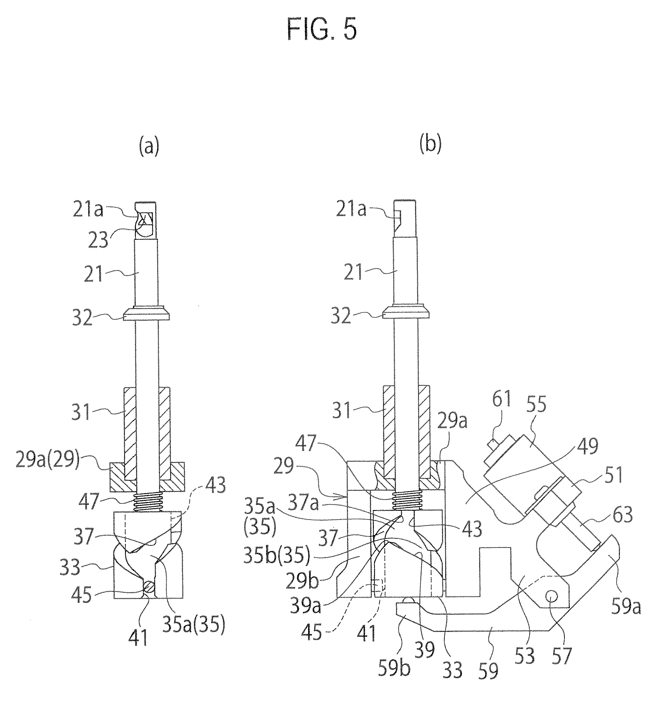

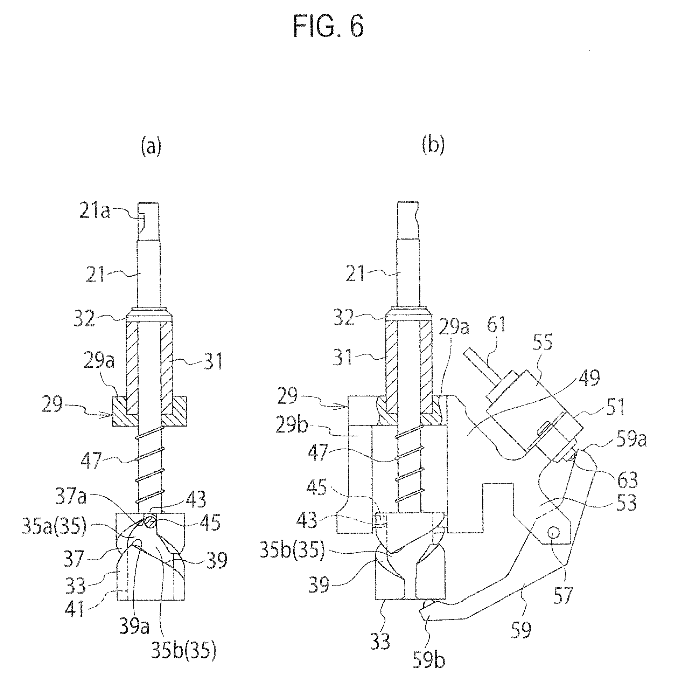

Next, a description is made of a rotating mechanism that rotates about the rotation axis line of the mirror shaft 21, which is perpendicular to the axial lines of the optical fibers 1 and 3. FIG. 5 shows a state where the mirror shaft 21 is located at the rising end in a similar way to FIG. 1, FIG. 6 shows a state where the mirror shaft 21 is located at a lowering end, and in comparison with the state of FIG. 5, in the state of FIG. 6, the mirror shaft 21 is rotated about the rotation axis line thereof clockwise by 90 degrees when viewed from the above of FIG. 5.

The mirror shaft 21 is vertically movable with respect to a fixing bracket 29, and the fixing bracket 29 includes a guide cylinder 31 in which a lower portion is attached to an upper plate portion 29a of the fixing bracket 29 so as to protrude upward therefrom. Then, the mirror shaft 21 in a state of being inserted into the guide cylinder 31 moves vertically. On a mirror 23 side of the mirror shaft 21, which is more on a tip end side than the guide cylinder 31, a stopper flange 32 is attached. When the mirror shaft 21 lowers as shown in FIG. 6, an upper end of the guide cylinder 31 abuts against the stopper flange 32, and regulates further lowering of the mirror shaft 21.

On a lower end of the mirror shaft 21, a cylindrical-shape member 33 is provided and integrated therewith. On one of semicircular arc portions of an outer circumferential portion of the cylindrical-shape member 33, a groove 35 illustrated as a front view in FIG. 6 (a) is formed. This groove 35 includes: a first inclined groove 35a that forms a spiral shape from the vicinity of an end portion of the mirror shaft 21 on an opposite side with the mirror 23 in the axial direction to the vicinity of an end portion thereof on the mirror 23 side; and a second inclined groove 35b that forms a spiral shape from an upper end of the first inclined groove 35a downward on the opposite side with the mirror 23.

Here, a mirror 23-side surface of the first inclined groove 35a becomes a guide inclined surface 37. Meanwhile, in the second inclined groove 35b, a surface thereof on the opposite side with the mirror 23 becomes a guide include surface 39. These respective guide inclined surfaces 37 and 39 compose at least a pair of cam surfaces, which have inclined directions different from each other and have shapes opposite to each other.

Moreover, as shown in FIG. 5(b), the respective guide inclined surfaces 37 and 39 are formed close to each other along a rotation direction, and portions of a pair of the guide inclined surfaces 37 and 39, which are close to each other, overlap each other in a circumferential direction. That is to say, as shown in FIG. 5(b), an upper end 37a of the guide inclined surface 37 and an upper end 39a of the guide inclined surface 39 overlap each other in the rotation direction.

Moreover, as shown in FIG. 5(a), on a lower portion in the axial direction in the cylindrical-shape member 33, which is opposite to the guide inclined surface 37, a lower axial-direction groove 41 extended in the vertical direction is formed. As shown in FIG. 5(b), on an upper portion in the axial direction in the cylindrical-shape member 33, which is opposite to the guide inclined surface 39, an upper axial-direction groove 43 extended in the vertical direction is formed. These respective axial-direction grooves 41 and 43 are set at positions apart from each other by an angle of 90 degrees in the circumferential direction.

Then, a protruding portion 45 as a guided portion that relatively moves along the groove 35 in the spiral shape and the respective axial-direction grooves 41 and 43 is provided on the above-described fixing bracket 29. On a tip end of an arm portion 29b extended downward from one side portion of the upper plate portion 29a of the fixing bracket 29, this protruding portion 45 is formed so as to protrude inward and enter the groove 35 and the axial-direction grooves 41 and 43. Note that this protruding portion 45 is located in the lower axial-direction groove 41 in FIG. 5 and is located in the upper axial-direction groove 43 in FIG. 6. The protruding portion 45 is located in the respective axial-direction grooves 41 and 43, whereby the rotation of the mirror shaft 23 is regulated.

Such a spiral-shaped groove 35 and the respective axial-direction grooves 41 and 43 are also formed in a similar way on other of the semicircular arc portions of the outer circumferential portion of the cylindrical-shape member 33, that is, on a back side of a sheet surface in FIG. 5(b).

Between an upper end surface of the cylindrical-shape member 33 including the groove 35 and the respective axial-direction grooves 41 and 43, which are described above, and the upper plate portion 29a of the fixing bracket 29, a spring 47 as an elastic member is provided. By this spring 47, the mirror shaft 21 is always pressed downward.

As shown in FIG. 5(b) and FIG. 6(b), on an opposite side of the fixing bracket 29 to the above-described arm portion 29b while sandwiching the mirror shaft 21 therebetween, a mirror shaft drive mechanism attachment portion 49 is formed. The mirror shaft drive mechanism attachment portion 49 includes: a motor attachment arm 51 that is bent upward on an opposite outside with the mirror shaft 21; and a rotary link attachment arm 53 that is bent downward on the opposite outside with the mirror shaft 21.

Then, a motor 55 as a drive unit is attached onto an upper portion of the motor attachment arm 51, and onto a tip end of the rotary link attachment arm 53, a rotary link 59 is rotatably attached through a rotary support pin 57. A rotating drive shaft 61 of the motor 55 is coupled to a screw shaft 63 of a ball screw, and by rotation of the screw shaft 63, which follows rotation of the rotating drive shaft 61, the screw shaft 63 moves in an axial direction thereof while rotating with respect to a nut (not shown).

A tip end of the screw shaft 63 abuts against an end portion 59a as one of end portions of the rotary link 59, and an end portion 59b as other of the end portions of the rotary link 59 abuts against a lower end surface of the cylindrical-shape member 33.

In a state where the mirror shaft 21 is located at the rising end as shown in FIG. 1 and FIG. 5, the screw shaft 63 is advancing. At this time, such an other-side end portion 59b of the rotary link 59 thrusts upward against the lower end surface of the cylindrical-shape member 33, whereby the spring 47 turns to a compressed state. When the motor 55 is driven to move and retreat the screw shaft 63 from this state, the rotary link 59 rotationally moves counterclockwise in FIG. 5 (b), the spring 47 is extended following this, and by elastic force of the spring 47 concerned, the cylindrical-shape member 33 turns to a lowering state as shown in FIG. 6 together with the mirror shaft 21.

When the cylindrical-shape member 33 moves downward from the state of FIG. 5, the protruding portion 45 moves relatively upward from the lower axial-direction groove 41, abuts against the guide inclined surface 37 immediately above the same, and after such abutment, moves relatively to the guide inclined surface 37 while being thrust against the guide inclined surface 37 concerned. Here, the protruding portion 45 is provided on and fixed to the fixing bracket 29. Accordingly, by the above-described relative movement, the cylindrical-shape member 33 rotates clockwise by 90 degrees when viewed from the above of FIG. 5 (a), and turns to the state of FIG. 6(a). That is to say, the mirror shaft 21 is located at the lowering end. At this time, the protruding portion 45 is in a state of entering the upper axial-direction groove 43, and the spring 47 is in an extended state.

Subsequently, when the motor 55 is rotationally driven in a direction reverse to the above from the state of FIG. 6, and the screw shaft 63 is moved to advance, then the rotary link 59 rotationally moves clockwise in FIG. 6(b), and the cylindrical-shape member 33 is raised against the spring 47. When the cylindrical-shape member 33 rises, the protruding portion 45 located in the upper axial-direction groove 43 as shown in FIG. 6 (a) abuts and thrusts against the guide inclined surface 39 immediately below the same. Accordingly, the cylindrical-shape member 33 further rotates by 90 degrees in the same direction as described above.

As described above, from the state of being located at the rising end position of FIG. 1 and FIG. 5, the screw shaft 63 moves and is retreated by driving the motor 55, whereby the mirror shaft 21 lowers while rotating by 90 degrees, and then further rotates by 90 degrees in the same direction and rises in such a manner that the screw shaft 63 moves and advances. In such a way, such retreat and advance movement of the screw shaft 63 is repeated once, whereby, at the rising end position, the mirror shaft 21 can turn an orientation of the mirror 23 to a state of rotating by 180 degrees.

That is to say, in the state of FIG. 1 and FIG. 5, the image of the end surface 1a of the one optical fiber 1 is reflected by the mirror 23, and is made incident onto the first lens 25a, and can be imaged by the first television camera 25. From this state, the mirror shaft 21 is rotated by 180 degrees by the drive of the motor 55, which is as described above, whereby the image of the end surface 3a of the other optical fiber 3 is reflected by the mirror 23, is made incident onto the second lens 27a, and can be imaged by the second television camera 27.

After the mirror shaft 21 rotates by 180 degrees, the retreat and advance movement of the screw shaft 63 is further repeated once by the drive of the motor 55, whereby the orientation of the mirror 23 turns to an original state, that is, a state of FIG. 1, where the image of the end surface 1a of the one optical fiber 1 is reflected.

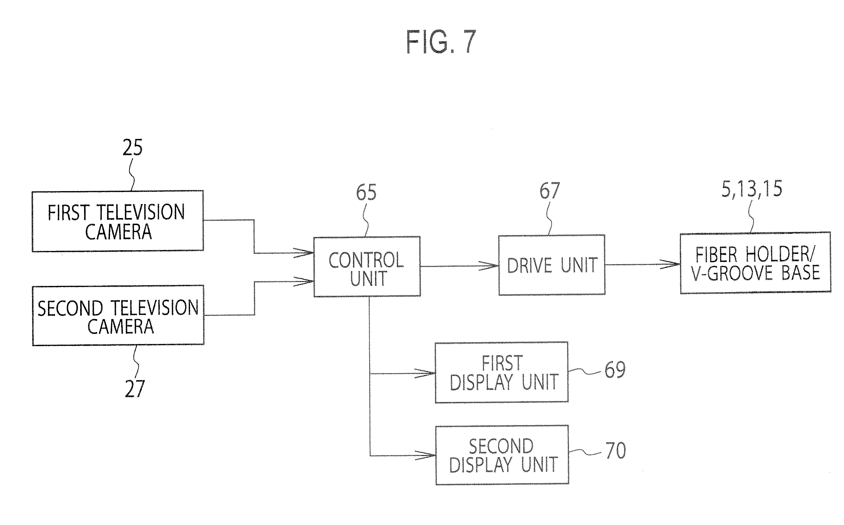

As shown in FIG. 7, the respective images imaged by the first and second television cameras 25 and 27 are individually subjected to image processing by an image processing circuit of a control unit 65, and separate data are thereby acquired. Then, based on these respective data, the wholes of the fiber holders 5 shown in FIG. 2 are rotated about the axial centers of the optical fibers 1 and 3, whereby the centering work is performed. Alternatively, only the V-groove bases 13 and 15 are moved in a diameter direction, whereby the axial center alignment is performed. Moreover, the separate image data of the optical fibers 1 and 3 are individually displayed on a first display unit 69 and a second display unit 70.

After the centering work or the axial center alignment is performed, the optical fibers 1 and 3 are fusion-spliced to each other by using discharge electrodes (not shown) in a state where the end surfaces 1a and 3a thereof are allowed to abut against each other. In the event of fusion-splicing the optical fibers 1 and 3 to each other, the mirror shaft 21 is placed at the lowering end position as shown in FIG. 6, so that the mirror shaft 21 cannot bother the fusion-splicing. Note that such abutment between the end surfaces 1a and 3a is performed by moving the fiber holders 5 in the axial direction.

As described above, in this embodiment, in the event of imaging the end surfaces 1a and 3a of the pair of optical fibers 1 and 3 to be fusion-spliced, front images of the end surfaces 1a and 3a of the optical fibers 1 and 3 are individually acquired by using the one mirror 23 provided on the mirror shaft 21 that rotates by 180 degrees. Therefore, the end surfaces 1a and 3a are imaged from the front, whereby high-precision images can be acquired in comparison with the case of imaging the optical fibers from the side. In addition, the respective end surfaces 1a and 3a of the pair of optical fibers 1 and 3 are individually imaged by the first television camera 25 and the second television camera 27, which correspond thereto, respectively, whereby such high-precision images can be acquired.

In this event, the first television camera 25 images the image of the end surface 1a of the one optical fiber 1, and accordingly, can optically receive the image concerned on the center of the first lens 25a. The second television camera 27 images the image of the end surface 3a of the one optical fiber 3, and accordingly, can optically receive the image concerned on the center of the second lens 27a. In such a way, even in the case where a diameter of the fibers is large, it becomes easy to set each of the fibers within an imaging range of the television camera, and such an imperfect image as at the time of simultaneously imaging both of the pair of optical fibers by one television camera can be avoided being formed, and such high-precision images can be obtained.

Moreover, the end surfaces 1a and 3a of the respective optical fibers 1 and 3 are imaged and observed, whereby regions of damage such as chips can also be found on the end surfaces 1a and 3a concerned, and defective pieces can also be found in advance before the fusion splicing.

Moreover, in this embodiment, the mirror shaft 21 includes the mirror 23 as a single piece, and is rotatable by 180 degrees about the rotation axis line perpendicular to the axial lines of the optical fibers 1 and 3, and there are provided: the first television camera 25 that images the image of the one end surface 1a, which is reflected in the above-described first state; and the second television camera 27 that images the image of the other end surface 3a, which is reflected in the second state.

In such a way, the images of the respective end surfaces 1a and 3a can be individually reflected toward the first and second television cameras 25 and 27 by using such a single mirror 23, and it can be easily specified which of the images imaged by the first and second television cameras 25 and 27 corresponds to which of the pair of optical fibers 1 and 3.

Moreover, in this embodiment, there are individually provided: the guide inclined surfaces 37 and 39, which are provided on the mirror shaft 21, are opposite to each other in the axial line direction of the above-described rotation axis line, and are inclined in the spiral shape of circling around the rotation axis line; and the protruding portion 45, which relatively moves along the guide inclined surfaces 37 and 39 while being guided with respect to the guide inclined surfaces 37 and 39, thereby moves the mirror shaft 21 in the axial line direction of the above-described rotation axis line, and simultaneously, rotates the mirror shaft 21 about the axial line of the rotation axis line. Then, with regard to the guide inclined surfaces 37 and 39, the pair of guide inclined surfaces 37 and 39, which have the inclined directions different from each other and have the shapes opposite to each other, are formed close to each other along the rotation direction, and the portions of the pair of guide inclined surfaces 37 and 39, which are close to each other, overlap each other in the circumferential direction.

In such a way, the mirror shaft 21 reciprocally moves in the vertical direction, whereby the protruding portion 45 is sequentially guided by the guide inclined surfaces 37 and 39, and it is made possible to rotate the mirror shaft 21 by every 90 degrees in the same direction, and by 180 degrees in total.

Moreover, in this embodiment, the mirror shaft 21 moves in one orientation of the axial line direction of the above-described rotation axis line, thereby moves and rotates by 90 degrees while allowing one of the pair of guide inclined surfaces 37 and 39 to contact the protruding portion 45, and meanwhile, moves in other orientation of the axial line direction of the above-described rotation axis line, thereby moves and rotates by 90 degrees while allowing other of the pair of guide inclined surfaces 37 and 39 to contact the protruding portion 45.

Therefore, only by vertically moving the mirror shaft 21, the mirror shaft 21 can be rotated by every 90 degrees in the same direction, and by 180 degrees in total.

Moreover, in this embodiment, there are provided: the spring 47 that moves the mirror shaft 21 in one orientation of the axial line direction of the above-described rotation axis line; and the motor 55 that moves the mirror shaft 21 in other orientation of the axial line direction of the above-described rotation axis line against the spring 47. Therefore, the mirror shaft 21 can be moved in one orientation by driving the motor 55 against the spring 47, and can be easily moved in the other orientation by the spring 47 by releasing the drive in the compression direction to the spring 47 by the motor 55 on the contrary. In this event, the motor 55, which is single, is sufficient. Accordingly, the number of components can be reduced, and a structure of the apparatus can also be simplified.

Moreover, in this embodiment, there are provided the first display unit 69 and the first display unit 70, which display the individual images imaged by the first television camera 25 and the second television camera 27, and the above-described individual images are individually displayed by these respective display units 69 and 70. In such a way, the observation of the respective end surfaces 1a and 3a of the pair of optical fibers 1 and 3 can be performed extremely easily.

Note that, in the above-described embodiment, two cameras, which are the first and second television cameras 25 and 27, are provided as the imaging units; however, the mirror shaft 23 is rotated counterclockwise by 90 degrees from the state of FIG. 3(a), whereby the reflected light of the images of the respective end surfaces 1a and 3a can be directed in the same direction (downward in FIG. 3(a)), and in such a way, it is possible for even a single television camera to cope with such imaging of the plural images. However, in this case, it is necessary for the mirror shaft 23 to adopt a structure that does not move vertically in the event of rotating, and there are required: a drive mechanism that only rotates the mirror shaft 21; and a drive mechanism that only moves the mirror shaft 21 vertically in order to move and retreat the mirror shaft 21 downward at the time of fusing the optical fibers.

Moreover, in the above-described embodiment, the protruding portion 45, which is single, is only provided on the lower end of the arm portion 29b; however, a similar protruding portion to this protruding portion 45 may be provided on the lower end of the mirror shaft drive mechanism attachment portion 49, which is located at a position opposite to the protruding portion 45, symmetrically to the protruding portion 45 in FIG. 5(b). This another protruding portion relatively moves in the groove 35 in a similar way to the protruding portion 45, and carries out a similar function to that of the protruding portion 45.

Furthermore, the above-described another protruding portion may be provided at a position different from the protruding portion 45 in the axial direction, and in response to this, a similar groove to the above-described groove 35 may be provided at a different position in the axial direction.

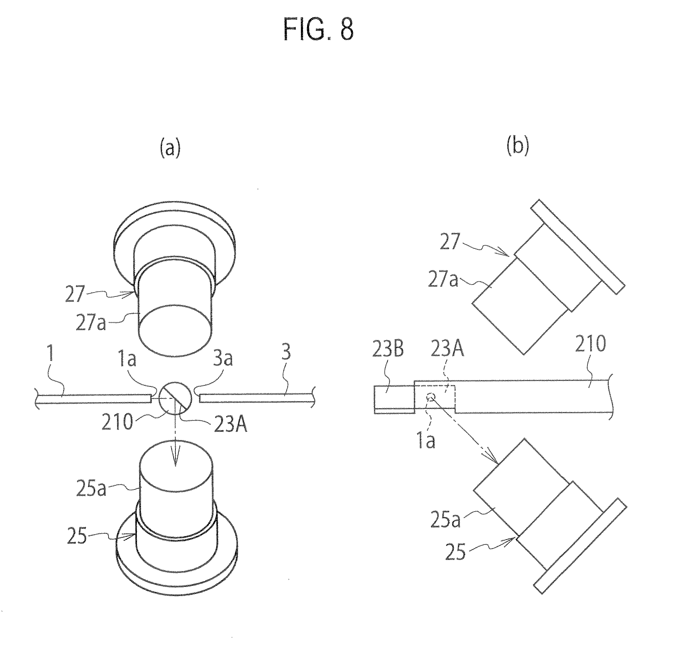

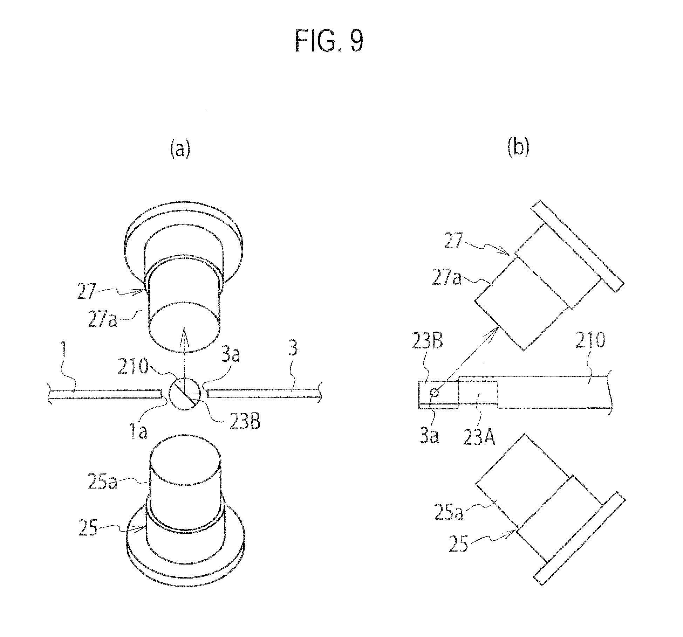

In another embodiment shown in FIG. 8 and FIG. 9, two mirrors 23A and 23B are provided on a mirror shaft 210 along an axial direction thereof in a state of being spaced apart from each other. The mirror shaft 210 is movable in the axial direction perpendicular to sheet surfaces in FIG. 8 (a) and FIG. 9 (a), and positions of the two mirrors 23A and 23B are different from each other by 180 degrees with respect to an axial center of the mirror shaft 210, which is taken as a center. Hence, the mirror shaft 210 is moved in the axial direction, whereby either of the two mirrors 23A and 23B can be located on the axial line of the optical fibers 1 and 3.

FIG. 8 shows a state where the mirror shaft 210 is raised. In this state, the mirror 23A located on a base portion side is located on the axial lines of the optical fibers 1 and 3. At this time, as a first state, the mirror 23A reflects the image of the end surface 1a of the optical fiber 1 as one in the pair, and makes the image incident onto the first lens 25a of the first television camera 25.

Meanwhile, FIG. 9 shows a state where the mirror shaft 210 is lowered. In this state, the mirror 23A located on a tip end side is located on the axial lines of the optical fibers 1 and 3. At this time, as a second state, the mirror 23B reflects the image of the end surface 3a of the optical fiber 3 as the other in the pair, and makes the image incident onto the second lens 27a of the second television camera 27.

As described above, also in this embodiment, the images of the respective end surfaces 1a and 3a of the pair of optical fibers 1 and 3 can be individually imaged and observed from the front. Accordingly, the high-precision images can be acquired in comparison with the case of imaging the optical fibers from the side. In addition, the high-precision images can be acquired by the first television camera 25 and the second television camera 27, which correspond to the respective end surfaces 1a and 3a of the pair of optical fibers 1 and 3.

Moreover, while the two mirrors 23A and 23B are used in this embodiment, either end surface of the end surfaces 1a and 3a of the pair of optical fibers 1 and 3 can be imaged from the front only by moving the mirror shaft 210, onto which these respective mirrors 23A and 23B are attached, in the axial direction thereof. In such a way, the entire structure can be simplified in comparison with the above-mentioned embodiment in which the mechanism that rotates the mirror shaft is provided.

Note that, also in this embodiment, such a mechanism that rotates the mirror shaft 210 is provided, whereby the mirror shaft 210 is lowered and rotated by 90 degrees clockwise in FIG. 8(a), for example, from the state of FIG. 8, whereby the cameras for use can be consolidated to one camera, which is the television camera 25 located on the lower side in FIG. 8 and FIG. 9.

Next, a description is made of a method for distinguishing an optical fiber, in which the types of the optical fibers 1 and 3 are distinguished from the images, which are obtained by imaging the end surfaces 1a and 3a of the optical fibers 1 and 3 by the first television camera 25 and the second television camera 27, in the event of fusion-splicing the end surfaces 1a and 3a of the optical fibers 1 and 3 by the fusion-splicing apparatus described above.

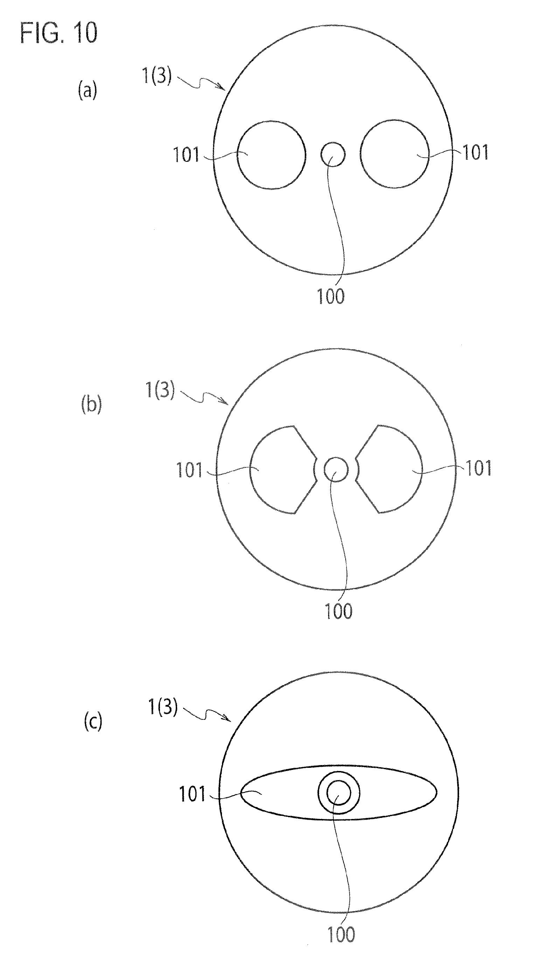

As the optical fibers 1 and 3, there are polarization maintaining optical fibers, each of which is equivalently given birefringence by being applied with stresses in two directions perpendicular to a core portion. As shown in FIG. 10, each of the polarization maintaining optical fibers has a structure, for example, in which stress applying portions 101 and 101 are provided on both sides of a core 100. The polarization maintaining optical fiber is classified, for example, into those called a PANDA-type optical fiber 1 (3) of FIG. 10(a), a bowtie-type optical fiber 1 (3) of FIG. 10(b) and an elliptical jacket-type optical fiber 1 (3) of FIG. 10 (c) based on a cross-sectional shape thereof. In order to fusion-splice such polarization maintaining optical fibers to each other, it is necessary to allow polarization planes of both thereof to coincide with each other. Accordingly, it is necessary to distinguish the type of each of the optical fibers 1 (3) based on the cross-sectional shape thereof. Note that the type of each of the optical fibers 1 and 3 is not limited to the polarization maintaining optical fiber, and may be a usual optical fiber.

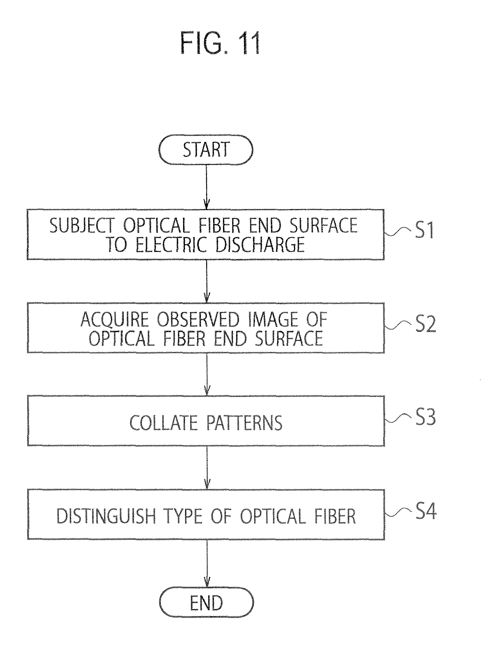

In this embodiment, before the fusion splicing using the above-described fusion-splicing apparatus, the type of each of the optical fibers 1 and 3 is distinguished in the following manner. FIG. 11 shows a flowchart for distinguishing the type of the optical fiber. First, in processing of Step S1, a voltage is applied between the discharge electrodes (not shown) provided in the above-described fusion-splicing apparatus, whereby an electric discharge is generated. Then, the end surfaces 1a and 3a of both of the optical fibers 1 and 3 are subjected to the electric discharge. On the end surfaces 1a and 3a of the optical fibers 1 and 3, since a mode of fusing as a result of the electric discharge differs between a spot added with an additive and a spot added with no additive, irregularities occur on the end surfaces 1a and 3a, and the stress applying portions 101 and 101 are emphasized. In such a way, it becomes easy to observe a feature such as a refractive index distribution from the images of the end surfaces 1a and 3a of the optical fibers 1 and 3.

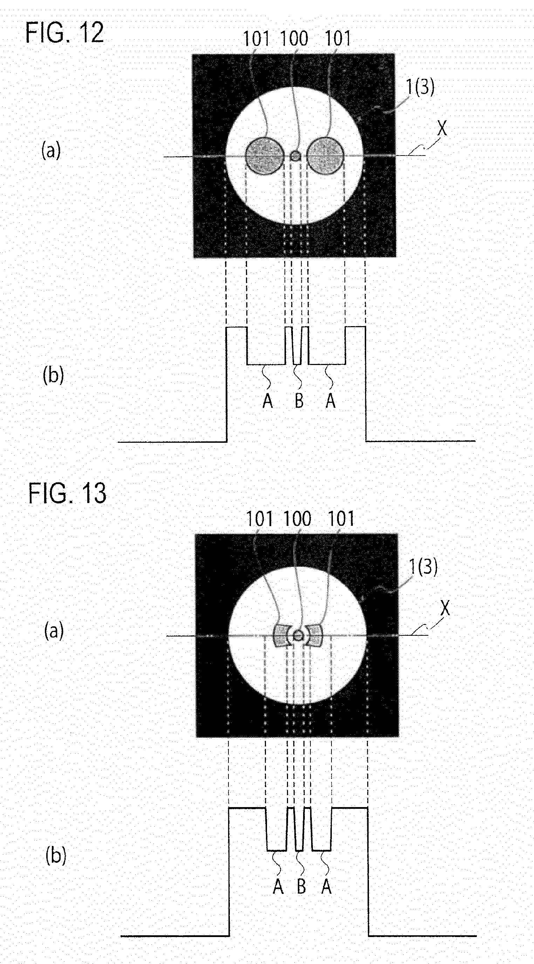

Next, in processing of Step S2, the mirror 23 is directed toward the end surface 1a of the one optical fiber 1, and the image of the end surface 1a is imaged by the first television camera 25. In a similar way, the mirror 23 is directed toward the end surface 3a of the other optical fiber 3, and the image of the end surface 3a is imaged by the second television camera 27. Then, the images of both of the optical fibers 1 and 3 are displayed on the first and second display units 69 and 70, respectively. FIG. 12 (a) shows the image of the optical fiber 1 (3) displayed on the display unit 69 or 70. Here, the image of the PANDA-type optical fiber 1 is displayed.

Then, image data obtained by imaging each of the end surfaces 1a and 3a of the PANDA-type optical fibers 1 and 3 is processed, whereby a brightness pattern as shown in FIG. 12 (b) is created. The brightness pattern of FIG. 12 (a) shows brightness on a straight line X that connects a center of the core portion 100 of the optical fiber 1 (3) and centers of the stress application portions 101 and 101 provided on both sides thereof. In this chart, brightness A of regions corresponding to the stress application portions 101 and 101 and brightness B of a region corresponding to the core portion 100 are both the same brightness, which is lower than brightness of other regions.

Next, in processing of Step S3, a brightness pattern of an optical fiber end surface (that is, the brightness pattern shown in FIG. 12(b)), which is obtained by imaging the end surface 1a (3a) of the optical fiber 1 (3) from the front, is collated with basic brightness patterns prestored for each type of the optical fibers. In this embodiment, as the basic brightness patterns, three types of the brightness patterns, which are of the PANDA-type optical fiber, the bowtie-type optical fiber and the elliptical jacket-type optical fiber, are prestored in a storage unit. As a matter of course, brightness patterns in optical fibers other than these three types of the optical fibers can also be stored as the basic brightness patterns in the storage unit.

Then, the actually obtained brightness pattern of FIG. 12(b) is collated with the basic brightness patterns stored in the storage unit. Next, in processing of Step S4, the basic brightness pattern that coincides with the above-described brightness pattern is obtained, and based on the basic brightness pattern concerned, the type of the optical fiber 1 (3) is distinguished.

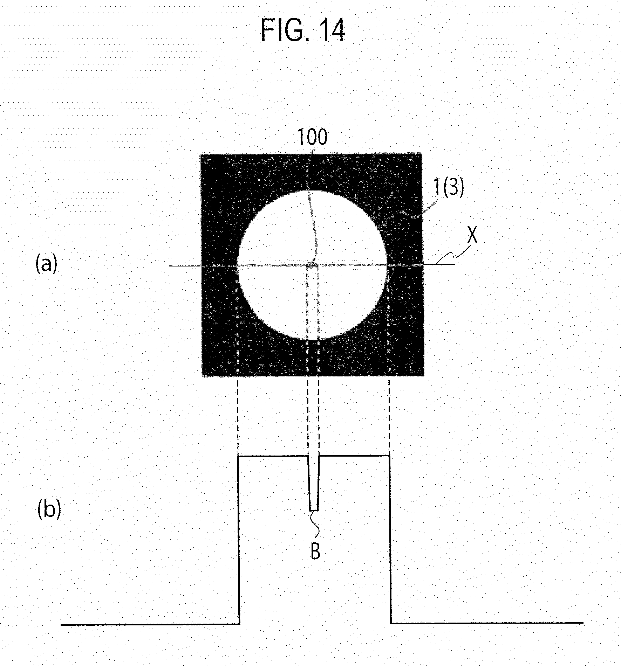

While FIG. 12 shows an example of the PANDA-type optical fiber, FIG. 13 shows an example of the bowtie-type optical fiber, and FIG. 14 shows an example of the elliptical jacket-type optical fiber. In the image of the bowtie-type optical fiber 1 (3) displayed on the display unit 69 or 70, as shown in FIG. 13 (a), the core portion 100 and the substantially rectangular stress application portions 101 and 101 provided on both sides thereof are displayed such that brightness of both is smaller than that of the other regions. Then, in a brightness pattern of this bowtie-type optical fiber 1 (3), as shown in FIG. 13 (b), brightness ranges of regions corresponding to the stress application portions 101 and 101 become small with respect to the brightness pattern of the PANDA-type optical fiber 1 (3) .

In the image of the elliptical jacket-type optical fiber 1 (3) displayed on the display unit 69 or 70, as shown in FIG. 14 (a), only brightness of the core portion 100 formed into the elliptical shape is displayed. Then, in a brightness pattern of this elliptical jacket-type optical fiber 1 (3), as shown in FIG. 14(b), such a stress application portion 101 is not present different from the PANDA-type optical fiber and the bowtie-type optical fiber.

As described above, the brightness pattern of the optical fiber end surface, which is obtained by imaging each of the end surfaces 1a and 3a of the optical fibers 1 and 3 from the front, is collated with the basic brightness patterns prestored for each type of the optical fibers 1 and 3, and the basic brightness pattern that coincides with the above-described brightness pattern is obtained, whereby the type of the optical fibers 1 and 3 is distinguished. As in the present invention, each of the end surfaces 1a and 3a of the optical fibers 1 and 3 is imaged not obliquely but from the front. Accordingly, an accurate brightness pattern can be obtained. Therefore, even in the case where it is difficult to grasp a feature of the brightness pattern as in an optical fiber having a complex refractive index distribution and the elliptical jacket-type optical fiber, the type of the optical fiber can be distinguished with ease.

Moreover, in the present invention, after the end surface of each of the optical fibers 1 and 3 is subjected to the electric discharge, the end surface of the optical fiber is imaged by the imaging unit. Accordingly, the irregularities occur on each of the end surfaces 1a and 3a by the fact that the mode of fusing thereof differs between the spot added with the additive and the spot added with no additive, and the stress application portion 101 comes to look emphatic. In such a way, the brightness pattern of the optical fiber end surface imaged by the imaging unit can be obtained accurately.

When the type of each of the optical fibers 1 and 3 is distinguished in such a manner as described above, both of the optical fibers 1 and 3 are fusion-spliced to each other. For example, in the case of the polarization maintaining optical fibers, centering thereof is performed in such a manner that both of the optical fibers 1 and 3 are rotated about the axial lines thereof so that the polarization planes of the optical fibers 1 and 3 can be allowed to coincide with each other. Thereafter, the end surfaces of both of the optical fibers 1 and 3 are fusion-spliced to each other. The optical fibers 1 and 3 fusion-spliced to each other as described above are connected to each other in a state where the polarization planes of both of the optical fibers 1 and 3 are accurately matched with each other. Therefore, an optical fiber cable with a small transmission loss can be obtained.

### [Industrial Applicability]

The present invention can be used for distinguishing the type of the optical fiber by using the brightness pattern obtained from the image obtained by imaging the end surface of the optical fiber.

## Claims

1. A method for distinguishing an optical fiber, in which, in an event of fusion-splicing end surfaces of a pair of cptical fibers to each other, a type of each of the optical fibers is distinguished from an image obtained by imaging the end surface of the optical fiber, the method comprising:
collating a brightness pattern of the end surface of the optical fiber, the brightness pattern being obtained by imaging a front of the end surface of the optical fiber by an imaging unit arranged opposite to the end surface of the optical fiber, with basic brightness patterns prestored for each type of the optical fibers; and
obtaining a basic brightness pattern that coincides with the brightness pattern.

2. The method for distinguishing an optical fiber according to claim 1,
wherein the end surface of the optical fiber is imaged by the imaging unit after the end surface of the optical fiber is subjected to an electric discharge.

3. A method for fusion-splicing optical fibers, comprising:
centering each of the optical fibers by rotating the optical fiber in an axial direction after distinguishing types of both of the optical fibers by the method for distinguishing an optical fiber according to either one of claims 1 and 2; and
fusion-splicing end surfaces of optical fibers to each other.
